# EUROPEAN PATENT APPLICATION

(11) **EP 4 553 871 A2**
(43) Date of publication of application: **14.05.2025**
(21) Application number: 24200203.8
(22) Date of filing: 13.09.2024
(51) Int. Cl.: H01G 4/232, H01G 4/30

(54) **EXTERNAL ELECTRODE FOR MULTILAYER CERAMIC CAPACITOR BASED ON A BASE ALLOY LAYER (CU/AG) A LOWER ELECTRODE BASED ON COPPER (CU) AND AN UPPER ELECTRODE BASED ON SILVER (AG)**

(30) Priority: 10.11.2023 KR 20230154965
(71) Applicant: Samsung Electro-Mechanics Co., Ltd., Gyeonggi-do (KR)
(72) Inventor: Jeong, Young Bin, Suwon-si, Gyeonggi-do (KR); Choi, Hyung Jong, Suwon-si, Gyeonggi-do (KR); Yun, Kwan Hee, Suwon-si, Gyeonggi-do (KR); Kim, Hyun Tak, Suwon-si, Gyeonggi-do (KR); Lee, Jin Sung, Suwon-si, Gyeonggi-do (KR); Noh, Boo Min, Suwon-si, Gyeonggi-do (KR); Kim, Min Woo, Suwon-si, Gyeonggi-do (KR)
(74) Representative: Grünecker Patent- und Rechtsanwälte PartG mbB

(57) **Abstract**

A multilayer electronic component (100) comprising:

a body (110) including a dielectric layer (111) and internal electrodes (121, 122) alternately disposed while having the dielectric layer (111) interposed therebetween, and having first (1) and second (2) surfaces opposing each other in a first direction (T), third (3) and fourth (4) surfaces connected to the first (1) and second (2) surfaces and opposing each other in a second direction (L), and fifth (5) and sixth (6) surfaces connected to the first (1) to fourth (4) surfaces and opposing each other in a third direction (W); and

first and second external electrodes (131, 132) each of which including a connection portion (P1a, P2a) disposed on the third surface (3) or the fourth (4) surface of the body (110) and a band portion (P1b, P2b) extending onto portions of the first (1) and second (2) surfaces from the connection portion (P1a, P2a), wherein:

- the first external electrode (131) includes a base alloy layer (131a) including a copper (Cu)-silver (Ag) alloy and disposed in the band portion (P1b),

- a lower electrode layer (131b) in contact with the internal electrode (121) at the connection portion (P1a) and in contact with the base alloy layer (131a) at the band portion (P1b), and an upper electrode layer (131c) disposed on the lower electrode layer (131b),

- the lower electrode layer (131b) includes copper (Cu), and

- the upper electrode layer (131c) includes silver (Ag) and glass.

Further, the first external electrode (131) includes an intermediate alloy layer (131d) including the Cu-Ag alloy and disposed at an interface between the lower electrode layer (131b) and the upper electrode layer (131c).

## Description

### CROSS-REFERENCE TO RELATED APPLICATION(S)

This application claims benefit of priority to Korean Patent Application No. 10-2023-0154965 filed on November 10, 2023 in the Korean Intellectual Property Office, the disclosure of which is incorporated herein by reference in its entirety.

### TECHNICAL FIELD

### 1. FIELD

The present disclosure relates to a multilayer electronic component.

### 2. DESCRIPTION OF RELATED ART

A multilayer ceramic capacitor (MLCC), one of multilayer electronic components, may be a chip-type condenser which is mounted on a printed circuit board of any of various electronic products, such as an imaging device such as a liquid crystal display (LCD) or a plasma display panel (PDP), a computer, a smartphone, or a mobile phone, to serve to charge or discharge electricity therein or therefrom. The MLCC may be used as a component of any of various electronic apparatuses because the MLCC is small, has high capacity, and is easily mounted.

In recent years, an external electrode is being thinned to miniaturize the MLCC. However, as the external electrode becomes thinner, external moisture or plating solution may easily penetrate into a capacitor body. In particular, the external electrode may generally be formed using a dipping method, and the external electrode formed using the dipping method may have a small thickness near an edge of the body. Accordingly, the external moisture or the plating solution may easily penetrate into the body through the edge of the body.

### SUMMARY

An aspect of the present disclosure is to provide a multilayer electronic component having improved moisture resistance reliability.

However, the present disclosure is not limited to the description described above, and may be more readily understood in the description of exemplary embodiments of the present disclosure.

According to an aspect of the present disclosure, a multilayer electronic component includes: a body including a dielectric layer and internal electrodes alternately disposed while having the dielectric layer interposed therebetween, and having first and second surfaces opposing each other in a first direction, third and fourth surfaces connected to the first and second surfaces and opposing each other in a second direction, and fifth and sixth surfaces connected to the first to fourth surfaces and opposing each other in a third direction; and external electrodes respectively including a connection portion disposed on the third surface or the fourth surface and a band portion extending onto portions of the first and second surfaces from the connection portion, wherein the external electrode includes a base alloy layer including a copper (Cu)-silver (Ag) alloy and disposed in the band portion, a lower electrode layer in contact with the internal electrode at the connection portion and in contact with the base alloy layer at the band portion, and an upper electrode layer disposed on the lower electrode layer, the lower electrode layer may include copper (Cu), and the upper electrode layer may include silver (Ag) and glass.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is a perspective view schematically showing a multilayer electronic component according to an exemplary embodiment of the present disclosure;
FIG. 2 is an exploded perspective view schematically showing a body of the multilayer electronic component of FIG. 1;
FIG. 3 is a cross-sectional view schematically showing section I-I' illustrated in FIG. 1;
FIG. 4 is a cross-sectional view schematically showing section II-II' illustrated in FIG. 1;
FIG. 5 is a cross-sectional view schematically showing section III-III' illustrated in FIG. 3;
FIG. 6 is a modified example of FIG. 3, and is a cross-sectional view schematically showing a multilayer electronic component according to another exemplary embodiment of the present disclosure.
FIG. 7 is a modified example of FIG. 6, and is a cross-sectional view schematically showing a multilayer electronic component according to another exemplary embodiment of the present disclosure.

### DETAILED DESCRIPTION

Hereinafter, exemplary embodiments of the present disclosure will now be described in detail with reference to the accompanying drawings. The exemplary embodiments of the present disclosure may be modified in many different forms and the scope of the present disclosure should not be limited to the exemplary embodiments set forth herein. In addition, the exemplary embodiments of the present disclosure are provided to more fully explain the present disclosure to those skilled in the art. In the drawings, the shapes and dimensions may thus be exaggerated for clarity, and the same reference numerals are used to designate the same or like components.

Further, in the accompanying drawings, portions unrelated to the description will be omitted in order to clearly describe the present disclosure, and the size and thickness of each component shown in the drawings are arbitrarily shown for convenience of explanation. Therefore, the present disclosure is not necessarily limited to contents shown in the drawings. Furthermore, like reference numerals will be used to designate like components having similar functions throughout the drawings within the scope of the present disclosure. In addition, throughout the specification, when an element "includes" another component, it is to be understood that the element may further include a third component rather than excluding the third component, unless explicitly described to the contrary.

In the drawings, a first direction may indicate a thickness (T) direction, a second direction may indicate a length (L) direction, and a third direction may indicate a width (W) direction.

### Multilayer electronic component

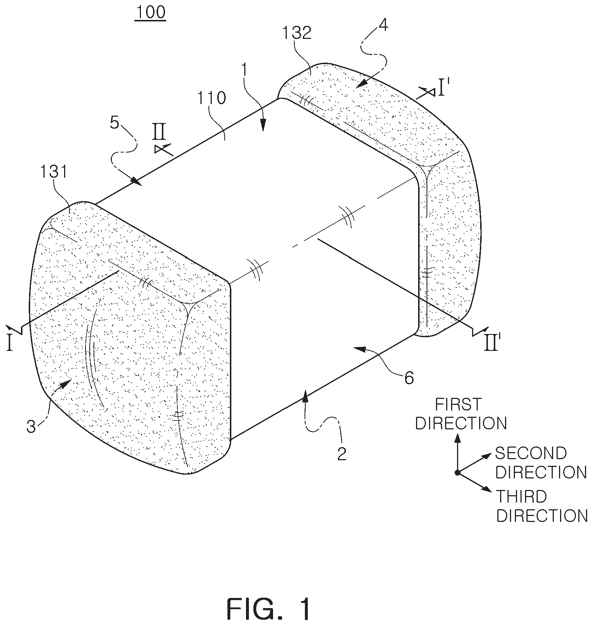

FIG. 1 is a perspective view schematically showing a multilayer electronic component according to an exemplary embodiment of the present disclosure.

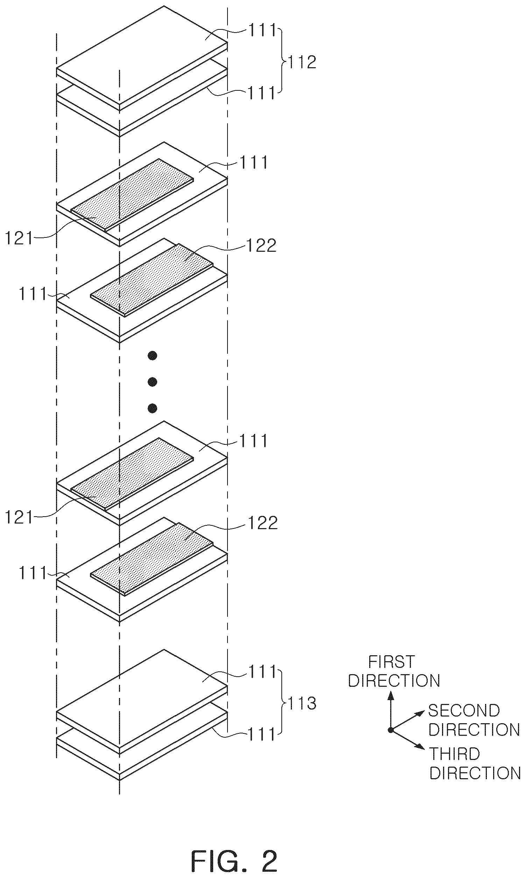

FIG. 2 is an exploded perspective view schematically showing a body of the multilayer electronic component of FIG. 1.

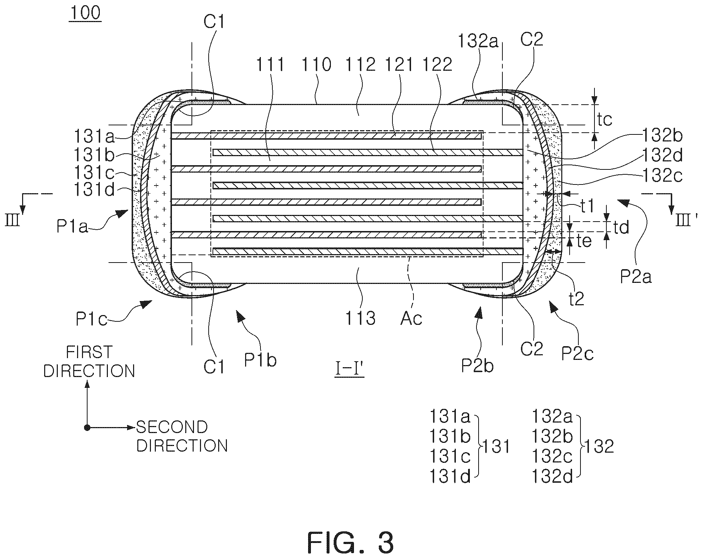

FIG. 3 is a cross-sectional view schematically showing section I-I' illustrated in FIG. 1.

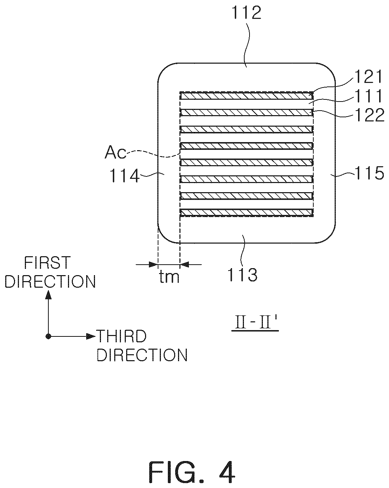

FIG. 4 is a cross-sectional view schematically showing section II-II' illustrated in FIG. 1.

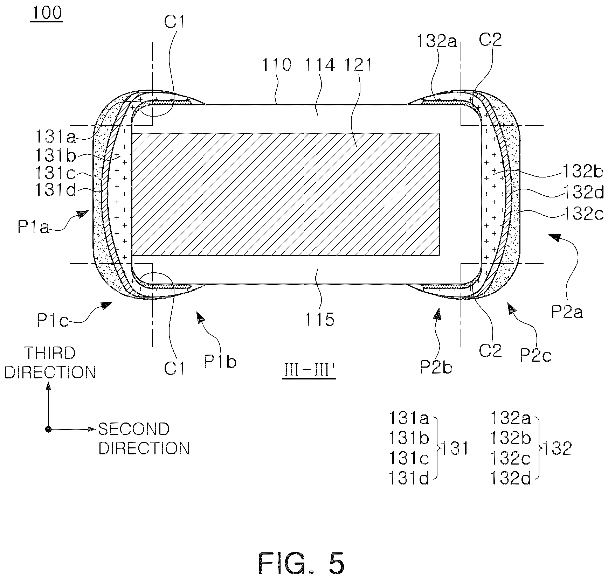

FIG. 5 is a cross-sectional view schematically showing section III-III' illustrated in FIG. 3.

Hereinafter, a multilayer electronic component, generally designated 100, according to an exemplary embodiment of the present disclosure is described with reference to FIGS. 1 through 5. In addition, a multilayer ceramic capacitor (MLCC) is described herein as an example of the multilayer electronic component 100. However, it should be understood that the multilayer electronic component 100 of the present disclosure is not limited to an MLCC, and may be applied to various multilayer electronic components, such as, for example, an inductor, a piezoelectric element, a varistor, or a thermistor.

A multilayer electronic component 100 according to an exemplary embodiment of the present disclosure may include a body 110 including a dielectric layer 111 and internal electrodes 121 and 122, and external electrodes 131 and 132.

The body 110 is not particularly limited to a specific shape, and may have a hexahedral shape or a shape similar to the hexahedral shape, as shown in the drawings. The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4, and opposing each other in the third direction.

The body 110 may include a first edge portion C1 connecting the third surface 3 to the first, second, fifth and sixth surfaces 1, 2, 5, and 6, and a second edge portion C2 connecting the fourth surface 4 to the first, second, fifth and sixth surfaces 1, 2, 5, and 6. Each of the first and second edge portions C1 and C2 may have a round shape. The edge portion C1 or C2 may be formed by performing a barrel polishing process of the body 110. The first to sixth surfaces 1, 2, 3, 4, 5, and 6 of the body 110 may be a generally flat surface, and its non-flat region may be the edge portions C1 and C2.

The body 110 may include the dielectric layer 111 and the internal electrodes 121 and 122 alternately disposed while having the dielectric layer 111 interposed therebetween. The plurality of dielectric layers 111 included in the body 110 may already be sintered, and the adjacent dielectric layers 111 may thus be integrated with each other, thus making it difficult to confirm a boundary therebetween without using a scanning electron microscope (SEM).

The dielectric layer 111 may be formed by preparing a ceramic slurry including a ceramic powder, an organic solvent and a binder, applying the slurry on a carrier film and drying the same to prepare a ceramic green sheet, and then sintering the ceramic green sheet. The ceramic powder is not particularly limited as long as the capacitor acquires sufficient capacitance, and may use, for example, a barium titanate-based material, a lead composite perovskite-based material, or a strontium titanate-based material. The ceramic powder may be, for example, barium titanate (BaTiOs) or (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), in which calcium (Ca), zirconium (Zr) or the like is partially dissolved in BaTiO₃. The organic solvent may use ethanol or the like, the binder may use polyvinyl butyral or the like, and the organic solvent and the binder may use known materials used in the art.

The internal electrodes 121 and 122 may include, for example, the first internal electrodes 121 and the second internal electrodes 122 alternately disposed in the first direction while having the dielectric layer 111 interposed therebetween. In some embodiments, adjacent first internal electrodes 121 and second internal electrodes 122, may form a pair of electrodes having different polarities that may oppose each other while having the dielectric layer 111 interposed therebetween. The first internal electrodes 121 and the second internal electrodes 122 may be electrically insulated from each other by the dielectric layer 111 disposed therebetween.

The first internal electrodes 121 may be spaced apart from the fourth surface 4 and may be connected to the first external electrode 131 at the third surface 3. The second internal electrodes 122 may be spaced apart from the third surface 3 and may be connected to the second external electrode 132 at the fourth surface 4.

A conductive metal included in the internal electrodes 121 or 122 may be at least one of nickel (Ni), copper (Cu), palladium (Pd), silver (Ag), gold (Au), platinum (Pt), tin (Sn), tungsten (W), titanium (Ti) and an alloy thereof, may include nickel (Ni), and is not limited thereto.

The internal electrodes 121 or 122 may be formed by applying a conductive paste for an internal electrode that includes the conductive metal to a predetermined thickness on the ceramic green sheet and sintering the same. A method of printing the conductive paste for an internal electrode may be a screen printing method, a gravure printing method or the like, and is not limited thereto.

An average thickness td of the dielectric layers 111 and an average thickness te of the internal electrodes 121 or 122 may not be particularly limited. The average thickness td of the dielectric layers 111 and the average thickness of the internal electrodes 121 or 122 may be set based on a desired feature or purpose. However, in order to achieve the miniaturization and high capacitance of the multilayer electronic component 100, the average thickness td of the dielectric layers 111 may be 0.4 um or more and 0.8 um or less, and the average thickness te of the internal electrodes 121 or 122 may be 0.35 um or more and 0.65 um or less. In general, a reliability feature of the multilayer electronic component 100, such as its insulation resistance or breakdown voltage, may be lower as a thickness of the dielectric layer 111 or that of the internal electrode 121 or 122 is smaller. However, the reliability of the multilayer electronic component 100 according to an exemplary embodiment of the present disclosure may be secured by the external electrode 131 and/or 132 of the multilayer electronic component 100 that has a multilayer structure described below even when the average thickness td of the dielectric layers 111 and the average thickness te of the internal electrodes 121 or 122 satisfy the above range.

The average thickness td of the dielectric layers 111 and the average thickness te of the internal electrodes 121 or 122 may respectively indicate average sizes of the dielectric layers 111 and the internal electrodes 121 or 122 in the first direction. The average thickness td of the dielectric layers 111 and the average thickness te of the internal electrodes 121 or 122 may be measured by scanning a cross section of the body 110 in a first-second direction by using the scanning electron microscope (SEM) at 10,000 magnification. In more detail, the average thickness td of the dielectric layers 111 may be acquired by measuring the thicknesses of the dielectric layer 111 at a plurality of points, for example, at thirty equally spaced points in the second direction, and then taking their average value. In addition, the average thickness te of the internal electrodes 121 or 122 may be acquired by measuring the thicknesses of the internal electrode 121 or 122 at a plurality of points, for example, at thirty equally spaced points in the second direction, and then taking their average value. The thirty equally spaced points may be specified in a capacitance formation portion Ac. Meanwhile, it is possible to acquire the more general average thickness td of the dielectric layers 111 and the more general average thickness te of the internal electrodes 121 or 122 when measuring each average value by extending a measurement target of the average value to ten dielectric layers 111 or ten internal electrodes 121 or 122.

The body 110 may include the capacitance formation portion Ac disposed in the body 110 and forming capacitance by including the first and second internal electrodes 121 and 122 alternately disposed while having the dielectric layer 111 interposed therebetween, and a first cover portion 112 and a second cover portion 113 disposed on both surfaces of the capacitance formation portion Ac that oppose each other in the first direction. The cover portion 112 or 113 may serve to prevent damage to the internal electrode that is caused by a physical or chemical stress. The cover portion 112 or 113 may have a configuration similar to that of the dielectric layer 111 except that the cover portion includes no internal electrode.

An average thickness tc of the cover portions 112 or 113 may not be particularly limited. In order to achieve the miniaturization and high capacitance of the multilayer electronic component 100, the average thickness tc of the cover portions 112 or 113 may be 30 um or less, and is not limited thereto. In an exemplary embodiment of the present disclosure, the reliability of the multilayer electronic component 100 may be secured by the external electrode 131 or 132 having the multilayer structure described below even when the average thickness tc of the cover portions 112 or 113 is 30 um or less. Here, the average thickness tc of the cover portions 112 or 113 may indicate an average thickness of each of the first cover portion 112 and the second cover portion 113.

The average thickness tc of the cover portions 112 or 113 may indicate an average size of the cover portions 112 or 113 in the first direction, and may be an average value of their sizes in the first direction that are measured at five points equally spaced in the second direction in the cross section of the body 110 in the first-second direction, passing through a center of the body 110 in the third direction.

The body 110 may include a first margin portion 114 and a second margin portion 115 respectively disposed on both surfaces of the capacitance formation portion Ac that oppose each other in the third direction. That is, the margin portions 114 and/or 115 may indicate a region between each end of the internal electrode 121 or 122 and a boundary surface of the body 110 in a cross section of the body 110 that is cut in a first-third direction.

The margin portions 114 and/or 115 may have a configuration similar to that of the dielectric layer 111 except that the margin portions 114 and/or 115 include no internal electrode. The margin portion 114 or 115 may serve to prevent the internal electrode from being damaged due to the physical or chemical stress.

The margin portions 114 and/or 115 may be formed by applying the conductive paste for an internal electrode on the ceramic green sheet and sintering the same, except for a region where the margin portions 114 and/or 115 are to be formed. Alternatively, in order to suppress a step caused by the internal electrodes 121 and/or 122, the margin portions 114 and/or 115 may be formed by cutting the stacked internal electrodes 121 and/or 122 to be exposed through the fifth and sixth surfaces 5 and 6 of the body, and then stacking one dielectric layer or two or more dielectric layers 111 on both the surfaces of the capacitance formation portion Ac that oppose each other in the third direction.

An average thickness tm of the margin portions 114 and/or 115 may not be particularly limited. In order to achieve the miniaturization and high capacitance of the multilayer electronic component 100, the average thickness tm of the margin portions 114 or 115 may be 30 um or less, and is not limited thereto. In an exemplary embodiment of the present disclosure, the reliability of the multilayer electronic component 100 may be secured by the external electrodes 131 and 132 having the multilayer structure described below even when the average thickness tm of the margin portions 114 or 115 is 30 um or less. Here, the average thickness tm of the margin portions 114 and/or 115 may indicate an average thickness of each of the first margin portion 114 and the second margin portion 115.

The average thickness tm of the margin portions 114 and/or 115 may indicate an average size of the margin portions 114 or 115 in the third direction, and may be an average value of their sizes in the third direction that are measured at five points equally spaced in the first direction in the cross section of the body 110 in the first-third direction, passing through the center of the body 110 in the second direction.

The external electrodes 131 and 132 may respectively be disposed on the third and fourth surfaces 3 and 4 of the body 110, and extend to portions of the first, second, fifth and sixth surfaces 1, 2, 5, and 6. The external electrodes 131 and 132 may include the first external electrode 132 connected to the first internal electrode 121 and the second external electrode 132 connected to the second internal electrode 122. Hereinafter, the description describes a structure of the multilayer electronic component 100 having two external electrodes 131 and 132, the structure is not limited thereto, and the number or shape of the external electrodes 131 and 132 may be changed based on the shape or form of the internal electrode 121 or 122 or another purpose.

The external electrode 131 or 132 may each include a connection portion P1a and P2a, respectively, disposed on the third surface 3 and fourth surface 4 respectively, and a band portion P1b and P2b extending onto portions of the respective first and second surfaces 1 and 2 from the respective connection portion P1a and P2a. The band portions P1b and P2b may extend from the respective connection portion P1a and P2a as a portion of the respective fifth surface 5 and sixth surface 6. The external electrodes 131 and/or 132 may include respective corner portions P1c or P2c disposed between the respective connection portion P1a and P2a and the respective band portion P1b and P2b. The corner portions P1c and P2c may be disposed on the respective edge portions C1 and C2 of the body 110.

The first external electrode 131 may include the first connection portion P1a disposed on the third surface 3, the first band portion P1b extending onto portions of the first and second surfaces 1 and 2 from the first connection portion P1a, and the first corner portion P1c may be disposed between the first connection portion P1a and the first band portion P1b.

The second external electrode 132 may include the second connection portion P2a disposed on the fourth surface 4, the second band portion P2b extending onto portions of the first and second surfaces 1 and 2 from the second connection portion P2a, and the second corner portion P2c may be disposed between the second connection portion P2a and the second band portion P2b.

The external electrode 131 and/or 132 may include, respectively, a base alloy layer 131a, 132a including a copper (Cu)-silver (Ag) alloy and disposed in the respective band portion P1b or P2b, a lower electrode layer 131b or 132b in contact with the respective internal electrode 121 or 122 at the respective connection portion P1a or P2a and in contact with the base alloy layer 131a or 132a at the band portion P1b or P2b, and an upper electrode layer 131c or 132c disposed on the lower electrode layer 131b or 132b.

The first external electrode 131 may include the first base alloy layer 131a disposed in the first band portion P1b and including the Cu-Ag alloy, the first lower electrode layer 131b in contact with the first internal electrode 121 at the first connection portion P1a and in contact with the first base alloy layer 131a at the first band portion P1b, and the first upper electrode layer 131c disposed on the first lower electrode layer 131b.

The second external electrode 132 may include the second base alloy layer 132a disposed in the second band portion P2b and including the Cu-Ag alloy, the second lower electrode layer 132b in contact with the second internal electrode 122 at the second connection portion P2a and in contact with the second base alloy layer 132a at the second band portion P2b, and the second upper electrode layer 132c disposed on the second lower electrode layer 132b.

The base alloy layers 131a and/or 132a may be disposed in the respective band portion P1b or P2b and may prevent external moisture from penetrating into the body 110. In an exemplary embodiment, an average size of pores included in the base alloy layers 131a and/or 132a may be smaller than an average size of pores included in the respective lower electrode layers 131b and/or 132b. The pore may be a potential path through which the external moisture penetrates into the body 110. The base alloy layers 131a and/or 132a may have a higher density than the lower electrode layer 131b and/or 132b by including the Cu-Ag alloy, thereby preventing the external moisture from penetrating into the body 110.

The base alloy layer 131a or 132a may have an end disposed in the corner portion P1c or P2c to prevent external moisture from penetrating into the body 110 through the edge portions C1 and/or C2 thereof. For example, the first base alloy layer 131a may have an end disposed in the first corner portion P1c, and the second base alloy layer 132a may have an end disposed in the second corner portion P2c. Further to this example, the first base alloy layer 131a may cover the first edge portion C1, and the second base alloy layer 132a may cover the second edge portion C2.

The Cu-Ag alloy included in the base alloy layers 131a and/or 132a may include oxygen (O). In some instances, copper (Cu), silver (Ag), and oxygen (O) may be detected in the base alloy layer 131a or 132a when performing an analysis thereon by using energy dispersive spectroscopy (EDS).

The lower electrode layers 131b and/or 132b may include copper (Cu). In some embodiments, the lower electrode layers 131b and/or 132b may also include glass. Glass included in the lower electrode layers 131b and/or 132b may include one or more oxides of barium (Ba), calcium (Ca), zinc (Zn), aluminum (Al), boron (B), and silicon (Si), and is not limited thereto.

The lower electrode layers 131b and/or 132b may include copper (Cu) as its main component. For example, a ratio of an area occupied by copper (Cu) to a total area of the lower electrode layers 131b and/or 132b may be 80% or more when analyzing a cross section of the multilayer electronic component 100 in the first-second direction, passing through the center of the multilayer electronic component 100 in the third direction, by using the scanning electron microscopy (SEM) and the energy dispersive spectroscopy (EDS). For example, the ratio of the area occupied by copper (Cu) to the total area of the lower electrode layers 131a and/or 132a may be greater than a ratio of an area occupied by an element other than copper (Cu) to the total area of the respective lower electrode layers 131a and/or 132a, in the cross section of the multilayer electronic component 100 in the first-second direction, passing through the center of the multilayer electronic component 100 in the third direction. The total area of a lower electrode layer 131b or 132b may indicate the total area occupied by that lower electrode layer 131b or 132b in an image analyzed by the SEM-EDS. The image may be an image showing the entire lower electrode layer 131b or 132b, or may be an enlarged image of a portion of the lower electrode layer 131b or 132b. Copper (Cu) may be detected in the lower electrode layers 131b and/or 132b, and silver (Ag) may not be detected therein when performing the analysis thereon by using the energy dispersive spectroscopy (EDS).

The lower electrode layer 131b or 132b may electrically connect the internal electrodes 121 and/or 122 to the respective external electrode 131 and/or 132. The internal electrodes 121 and/or 122 may include nickel (Ni). In some embodiments, copper (Cu) in the lower electrode layer 131b and/or 132b may diffuse to the respective internal electrodes 121 and 122 in its firing process to form a Ni-Cu alloy, thereby improving connectivity between the internal electrode 121 or 122 and the external electrode 131 or 132. In an exemplary embodiment, the base alloy layer 131a and/or 132a may not be disposed in the connection portion P1a or P2a. The first base alloy layer 131a may not be disposed in the first connection portion P1a, and the second base alloy layer 132a may not be disposed in the second connection portion P2a. In some embodiments, the first base alloy layer 131a and second base alloy layer 132a may not directly contact the internal electrodes 121 and/or 122. In an instance, where the base alloy layer 131a and/or 132a is disposed in the connection portion P1a or P2a, the base alloy layer 131a and/or 132a may prevent copper (Cu) of the respective lower electrode layer 131b or 132b from being diffused toward the internal electrodes 121 and 122. This may prevent formation of the Ni-Cu alloy. Therefore, the base alloy layer 131a or 132a may not be disposed in the connection portion P1a or P2a.

A thickness of the lower electrode layers 131b and/or 132b may not be particularly limited. For example, the thickness of the lower electrode layer 131b or 132b in its central region in the first direction may be 20 um or less, in the cross section of the body 110 in first-second direction, passing through the center of the body 110 in third direction, and is not limited thereto.

A method of forming the base alloy layers 131a and/or 132a and the lower electrode layer 131b or 132b may not be particularly limited. For example, a silver (Ag) seed layer may be formed by dipping the body 110 into a silver (Ag) paste including a silver (Ag) powder, glass, the binder, the organic solvent, or the like, removing the Ag paste applied to the third and fourth surfaces 3 and 4 of the body 110, and then sintering the Ag paste applied to the first, second, fifth, and sixth surfaces 1, 2, 5, and 6 of the body 110. Next, the lower electrode layer 131b or 132b may be formed by dipping the body 110, on which the Ag seed layer is formed, into a copper (Cu) paste including a copper (Cu) powder, glass, the binder, the organic solvent, or the like, and then sintering the Cu paste. Meanwhile, when the lower electrode layers 131b and/or 132b are formed by sintering the Cu paste, copper (Cu) in the respective lower electrode layer 131b or 132b may diffuse to the Ag seed layer, and react with silver (Ag) in the Ag seed layer. As a result, the Ag seed layer may form the base alloy layer 131a or 132a including the Cu-Ag alloy. Forming the base alloy layer 131a or 132a to include the Cu-Ag alloy, the Cu paste may be sintered at a temperature of 600°C or more and 850°C or less to, is not limited thereto.

The upper electrode layers 131c and/or 132c may include silver (Ag) and glass. Glass included in the upper electrode layers 131c and/or 132c may include one or more oxides of barium (Ba), calcium (Ca), zinc (Zn), aluminum (Al), boron (B), and silicon (Si), and is not limited thereto.

The upper electrode layers 131c and/or 132c may include silver (Ag) as its main component. For example, a ratio of an area occupied by silver (Ag) to a total area of the upper electrode layers 131c and/or 132c may be 80% or more when analyzing the cross section of the multilayer electronic component 100 in the first-second direction, passing through the center of the multilayer electronic component 100 in the third direction, by using the scanning electron microscopy (SEM) and the energy dispersive spectroscopy (EDS). For example, the ratio of the area occupied by silver (Ag) to the total area of the upper electrode layers 131c and/or 132c respectively, may be greater than a ratio of an area occupied by an element other than silver (Ag) to the total area of the upper electrode layers 131c and/or 132c, in the cross section of the multilayer electronic component 100 in the first-second direction, passing through the center of the multilayer electronic component 100 in the third direction. The total area of the respective upper electrode layer 131c and 132c may indicate the total area occupied by the upper electrode layer 131c or 132c in the image analyzed by the SEM-EDS. The image may be an image showing the entire upper electrode layer 131c or 132c, or may be an enlarged image of a portion of the upper electrode layer 131c or 132c. Meanwhile, silver (Ag) may be detected in the upper electrode layer 131c or 132c, and copper (Cu) may not be detected therein when performing the analysis thereon by using the energy dispersive spectroscopy (EDS).

A method of forming the upper electrode layer 131c or 132c may not be particularly limited. For example, in order to achieve the thin external electrodes 131 and/or 132, the upper electrode layer 131c and/or 132c may be formed by printing the Ag paste on the respective lower electrode layer 131b and 132b by using the screen printing method and then sintering the same. Alternatively, the upper electrode layers 131b and/or 132b may be formed by attaching a conductive sheet including the silver (Ag) powder, glass, the binder, or the like to the respective lower electrode layer 131b and/or 132b and then sintering the same. A sintering process to form the upper electrode layers 131c and/or 132c may be performed at the temperature of 600°C or more and 850°C or less, and is not limited thereto.

The upper electrode layers 131c and/or 132c may be disposed in the respective connection portions P1a and P2a. The first upper electrode layer 131c may be disposed in the first connection portion P1a, and the second upper electrode layer 132c may be disposed in the second connection portion P2a. Meanwhile, in order to achieve the thin external electrode 131 and/or 132, the respective upper electrode layer 131c and/or 132c may be formed by using the screen printing method. The upper electrode layer 131c and/or 132c may not be disposed in the band portion P1b or P2b. Alternatively, in an exemplary embodiment, the upper electrode layer 131c and/or 132c may have an end disposed in the band portion P1b or P2b while not covering an end of the respective lower electrode layer 131b and/or 132b.

A thickness of the respective upper electrode layer 131c or 132c may not be particularly limited. However, t2>t1 may be satisfied where t1 indicates the thickness of the respective upper electrode layer 131c or 132c that is measured in a central region of the body 110 in the first direction, and t2 indicates the thickness of the respective upper electrode layer 131c or 132c that is measured based on the outermost respective internal electrode of the internal electrodes 121,122 in the first direction, in the cross section of the body 110 in the first-second direction, passing through the center of the body 110 in the third direction. As shown in FIG. 3, the lower electrode layers 131a and/or 132a may have a maximum thickness at its central portion in the first direction when formed using the dipping method. Meanwhile, the upper electrode layers 131c and/or 132c may be thin and flat at its central portion in the first direction and thick at its outer portion in the first direction when formed on the lower electrode layer 131b and/or 132b by using the screen printing method. Accordingly, the thickness t2 may be greater than thickness t1. Thickness t2 may not be particularly limited, and may be, for example, 8 um or less.

In an exemplary embodiment, the external electrodes 131 and/or 132 may include respective intermediate alloy layers 131d and 132d including the Cu-Ag alloy and disposed at an interface between the respective lower electrode layer 131b and/or 132b and the upper electrode layer 131c and/or 132c. The first external electrode 131 may include the first intermediate alloy layer 131d disposed at the interface between the first lower electrode layer 131b and the first upper electrode layer 131c, and the second external electrode 132 may include the second intermediate alloy layer 132d disposed at the interface between the second lower electrode layer 132b and the second upper electrode layer 132c.

The intermediate alloy layers 131d and/or 132d may be formed by a mutual reaction between copper (Cu) in the respective lower electrode layers 131b and/or 132b and silver (Ag) in the upper electrode layers 131c and/or 132c when the respective upper electrode layers 131c and/or 132c are formed by sintering the Ag paste. The intermediate alloy layers 131d and/or 132d may be disposed continuously or discontinuously at the interface between the respective lower electrode layer 131b or 132b and the upper electrode layer 131c or 132c.

The Cu-Ag alloy included in the intermediate alloy layers 131d and/or 132d may include oxygen (O). That is, copper (Cu), silver (Ag), and oxygen (O) may be detected in the intermediate alloy layer 131d and/or 132d when performing the analysis thereon by using the energy dispersive spectroscopy (EDS).

Like the base alloy layers 131a and 132a, the intermediate alloy layers 131d and 132d may include the Cu-Ag alloy having a higher density than that included in the respective lower electrode layer 131b or 132b and/or the respective upper electrode layer 131c or 132c, thus serving to suppress the external moisture from penetrating into the body 110. In an exemplary embodiment, an average size of pores included in the intermediate alloy layers 131d and/or 132d may be smaller than an average size of pores included in the upper electrode layers 131c and/or 132c.

In order to achieve the thin external electrode 131 or 132, the upper electrode layers 131c and/or 132c may be formed by using the screen printing method. In such an instance, the intermediate alloy layers 131d and/or 132d may not be formed in the band portion P1b or P2b and/or the corner portion P1c or P2c or may be formed therein while having an insufficient thickness. In this case, the intermediate alloy layer 131d or 132d may fail to sufficiently prevent the external moisture from penetrating into the edge portion C1 or C2 of the body 110. On the other hand, according to an exemplary embodiment of the present disclosure, the intermediate alloy layer 131d or 132d may primarily suppress the external moisture penetration, and the base alloy layer 131a or 132a covering the edge portion C1 or C2 may secondarily suppress the external moisture penetration, thereby more effectively improving moisture resistance reliability of the multilayer electronic component 100.

In an exemplary embodiment, a ratio of an area of the intermediate alloy layers 131d and/or 132d to a total area of the respective external electrode 131 and/or 132 may be 25% or less in the cross section of the body 110 in the first-second direction, passing through the center of the body 110 in the third direction. The ratio of the area of the first intermediate alloy layer 131d to the total area of the first external electrode 131 may be 25% or less, and the ratio of the area of the second intermediate alloy layer 132d to the total area of the second external electrode 132 may be 25% or less, in the cross section of the body 110 in the first-second direction, passing through the center of the body 110 in the third direction. The total area of the external electrodes 131 and/or 132 may indicate a total area of the respective base alloy layer 131a or 132a, the lower electrode layer 131b or 132b, the upper electrode layer 131c or 132c, and the intermediate alloy layer 131d or 132d.

The multilayer electronic component 100 may have lower capacitance when the ratio of the area of the intermediate alloy layers 131d and/or 132d to the total area of the respective external electrode 131 or 132 is more than 25%. Meanwhile, the ratio of the area of the intermediate alloy layer 131d and/or 132d to the total area of the respective external electrode 131 or 132 may be 4% or more. The moisture resistance reliability of the present disclosure may be insignificantly improved when the ratio of the area of the intermediate alloy layer 131d and/or 132d is less than 4% of the total area of the external electrode 131 or 132.

In an exemplary embodiment, a ratio of an area of the base alloy layer 131a and/or 132a to the total area of the respective external electrode 131 or 132 may be 1% or more and 3% or less in the cross section of the body 110 in the first-second direction, passing through the center of the body 110 in the third direction.

A thickness of the intermediate alloy layer 131d and/or 132d may not need to be particularly limited. For example, the thickness of the intermediate alloy layer 131d and/or 132d may be 1 um to 2 um in the cross section of the body 110 in the first-second direction, passing through the center of the body 110 in the third direction.

In some embodiments, and although not shown, the external electrodes 131 and/or 132 may further include a plating layer disposed on the respective upper electrode layer 131c or 132c. A type of the plating layer is not particularly limited, and may be a plating layer including nickel (Ni), tin (Sn), palladium (Pd), and/or an alloy including the same, and may include a plurality of layers. The plating layer may be, for example, a nickel (Ni) plating layer or a tin (Sn) plating layer, and may have the sequentially-formed Ni plating layer and Sn plating layer. In addition, the plating layer may include the plurality of Ni plating layers and/or the plurality of Sn plating layers.

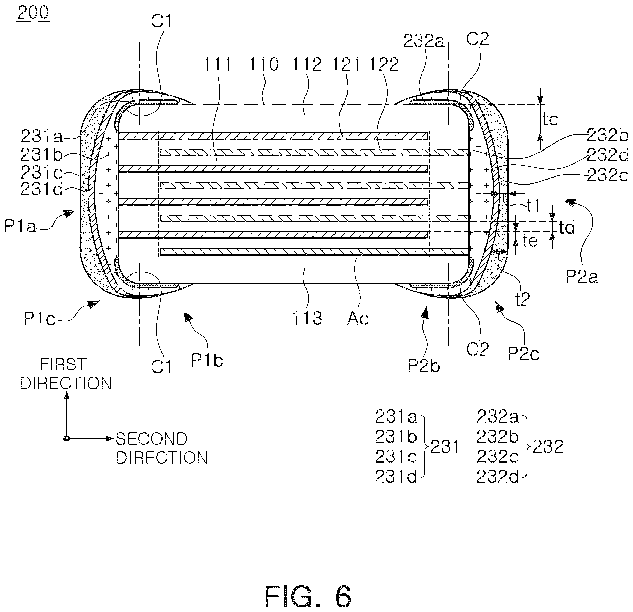

FIG. 6 is a modified example of FIG. 3, and is a cross-sectional view schematically showing a multilayer electronic component 200 according to another exemplary embodiment of the present disclosure. Hereinafter, the description describes the multilayer electronic component 200 according to another exemplary embodiment of the present disclosure with reference to FIG. 6, and omits its description overlapping that of the multilayer electronic component 100 according to an exemplary embodiment of the present disclosure described above.

The multilayer electronic component 200 according to another exemplary embodiment of the present disclosure may include the body 110 and first and second external electrodes 231 and 232.

The external electrodes 231 and/or 232 may include a respective base alloy layer 231a and 232a including the Cu-Ag alloy and disposed in the band portion P1b or P2b and extending onto the connection portion P1a or P2a, a lower electrode layer 231b or 232b in contact with the internal electrode 121 or 122 at the connection portion P1a or P2a, and in contact with the base alloy layer 231a or 232a at the band portion P1b or P2b, and an upper electrode layer 231c or 232c disposed on the lower electrode layer 231b or 232b.

The first external electrode 231 may include the first base alloy layer 231a including the Cu-Ag alloy and disposed in the first band portion P1b and extending onto the first connection portion P1a, the first lower electrode layer 231b may be in contact with the first internal electrode 121 at the first connection portion P1a and may be in contact with the first base alloy layer 231a at the first band portion P1b, and the first upper electrode layer 231c may be disposed on the first lower electrode layer 231b.

The second external electrode 232 may include the second base alloy layer 232a including the Cu-Ag alloy and disposed in the second band portion P2b and may extend onto the second connection portion P2a, the second lower electrode layer 232b may be in contact with the second internal electrode 122 at the second connection portion P2a and may be in contact with the second base alloy layer 232a at the second band portion P2b, and the second upper electrode layer 232c may be disposed on the second lower electrode layer 232b.

The first external electrode 231 may include a first intermediate alloy layer 231d including the Cu-Ag alloy and disposed at an interface between the first lower electrode layer 231b and the first upper electrode layer 231c. The second external electrode 232 may include a second intermediate alloy layer 232d including the Cu-Ag alloy and disposed at an interface between the second lower electrode layer 232b and the second upper electrode layer 232c.

In the multilayer electronic component 200 according to an exemplary embodiment of the present disclosure, the base alloy layer 231a or 232a may have an end disposed in the connection portion P1a or P2a. The first base alloy layer 231a may have an end disposed in the first connection portion P1a, and the second base electrode layer 232a may have an end disposed in the second connection portion P2a. Accordingly, the base alloy layer 231a or 232a may more effectively cover the edge portion C1 or C2 of the body 110, thereby further improving the moisture resistance reliability of the multilayer electronic component 200.

In an exemplary embodiment, the base alloy layers 231a and/or 232a may not be in contact with the respective internal electrodes 121 or 122. The first base alloy layer 231a may not be in contact with the first internal electrode 121. For example, the first base alloy layer 231a may have an end disposed on a surface of the cover portion 112 or 113 in the second direction. The second base alloy layer 232a may not be in contact with the second internal electrode 122. For example, the second base alloy layer 232a may have an end disposed on the surface of the cover portion 112 or 113 in the second direction.

The base alloy layers 231a and/or 232a may not be in contact with the internal electrode 121 or 122, thereby allowing copper (Cu) in the respective lower electrode layers 231b or 232b to easily diffuse to the internal electrode 121 or 122. In this way, the moisture resistance reliability of the multilayer electronic component 200 may be improved without lowering the contact between the internal electrode 121 or 122 and the external electrode 231 or 232.

A method of forming the base alloy layer 231a and/or 232a may not need to be particularly limited. For example, the silver (Ag) seed layer may be formed by dipping the body 110 into the silver (Ag) paste, removing the Ag paste applied to both sides of the capacitance formation portion Ac in the second direction, and then sintering the Ag paste. Next, the Cu paste may be sintered to form the lower electrode layer 231b or 232b, thereby forming the base alloy layer 231a or 232a, disposed in the band portion P1b or P2b and extending onto the connection portion P1a or P2a.

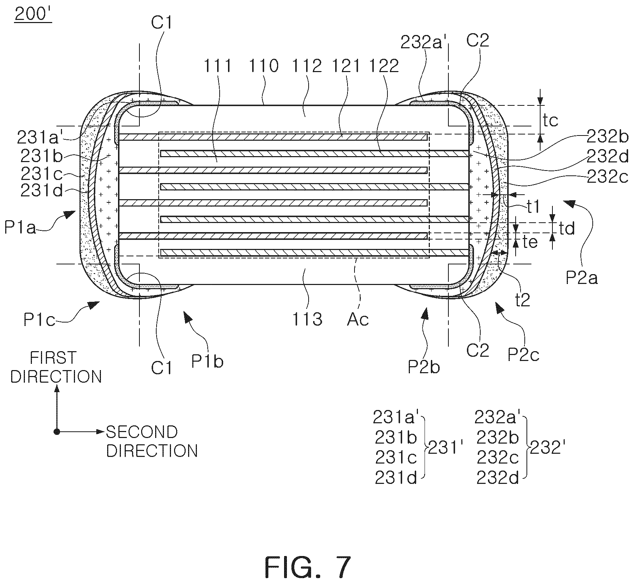

FIG. 7 is a modified example of FIG. 6, and is a cross-sectional view schematically showing a multilayer electronic component 200' according to another exemplary embodiment of the present disclosure.

Referring to FIG. 7, a base alloy layers 231a' and/or 232a' may be in contact with the respective outermost internal electrode 121 or 122 in the first direction. For example, the first base alloy layer 231a' of a first external electrode 231' may be in contact with the outermost first internal electrode 121 in the first direction. The second base alloy layer 232a' of a second external electrode 232' may be in contact with the outermost second internal electrode 122 in the first direction. Meanwhile, and although not shown, the first base alloy layers 231a' may respectively be in contact with the uppermost and lowermost first internal electrodes 121 in the first direction, and the second base alloy layers 232a' may respectively be in contact with the uppermost and lowermost second internal electrodes 122 in the first direction.

As set forth above, according to the exemplary embodiments of the present disclosure, the multilayer electronic component may have the improved moisture resistance reliability.

While the exemplary embodiments have been shown and described above, it will be apparent to those skilled in the art that modifications and variations could be made without departing from the scope of the present disclosure as defined by the appended claims.

## Claims

1. A multilayer electronic component comprising:
a body including a dielectric layer and internal electrodes alternately disposed while having the dielectric layer interposed therebetween, and having first and second surfaces opposing each other in a first direction, third and fourth surfaces connected to the first and second surfaces and opposing each other in a second direction, and fifth and sixth surfaces connected to the first to fourth surfaces and opposing each other in a third direction; and
first and second external electrodes each of which including a connection portion disposed on the third surface or the fourth surface of the body and a band portion extending onto portions of the first and second surfaces from the connection portion,
wherein the first external electrode includes a base alloy layer including a copper (Cu)-silver (Ag) alloy and disposed in the band portion, a lower electrode layer in contact with the internal electrode at the connection portion and in contact with the base alloy layer at the band portion, and an upper electrode layer disposed on the lower electrode layer,
the lower electrode layer includes copper (Cu), and
the upper electrode layer includes silver (Ag) and glass.

2. The multilayer electronic component according to claim 1, wherein an average size of pores included in the base alloy layer is smaller than an average size of pores included in the lower electrode layer.

3. The multilayer electronic component according to claim 1, wherein the first external electrode includes an intermediate alloy layer including the Cu-Ag alloy and disposed at an interface between the lower electrode layer and the upper electrode layer.

4. The multilayer electronic component according to claim 3, wherein an average size of pores included in the intermediate alloy layer is smaller than an average size of pores included in the upper electrode layer.

5. The multilayer electronic component according to claim 3, wherein a ratio of an area of the intermediate alloy layer to a total area of the first external electrode is 25% or less in a cross section of the body in a first-second direction, passing through a center of the body in the third direction.

6. The multilayer electronic component according to claim 1, wherein the upper electrode layer is disposed in the connection portion.

7. The multilayer electronic component according to claim 6, wherein the upper electrode layer has an end disposed in the band portion while not covering an end of the lower electrode layer.

8. The multilayer electronic component according to claim 1, wherein t2>t1 where t1 indicates a thickness of the upper electrode layer that is measured in a central region of the body in the first direction, and t2 indicates a thickness of the upper electrode layer that is measured based on an outermost internal electrode of the internal electrodes in the first direction, in a cross section of the body in a first-second direction, passing through a center of the body in the third direction.

9. The multilayer electronic component according to claim 1, wherein the first external electrode includes a corner portion disposed between the connection portion and the band portion, and
the base alloy layer has an end disposed in the corner portion.

10. The multilayer electronic component according to claim 9, wherein the base alloy layer is not disposed in the connection portion.

11. The multilayer electronic component according to claim 1, wherein the base alloy layer has an end disposed in the connection portion.

12. The multilayer electronic component according to claim 1, wherein the body includes a first edge portion connecting the third surface to the first, second, fifth and sixth surfaces, and a second edge portion connecting the fourth surface to the first, second, fifth and sixth surfaces,
each of the first and second edge portions has a round shape, and
the base alloy layer covers the first or second edge portions.

13. The multilayer electronic component according to claim 1, wherein the lower electrode layer includes copper (Cu) as its main component, and
the upper electrode layer includes silver (Ag) as its main component.

14. The multilayer electronic component according to claim 1, wherein a concentration of copper (Cu) in the lower electrode layer is greater than a concentration of copper (Cu) in the upper electrode layer and a concentration of copper (Cu) in the base alloy layer.

15. The multilayer electronic component according to claim 1, wherein a concentration of silver (Ag) in the lower electrode layer is less than a concentration of silver (Ag) in the upper electrode layer and a concentration of silver (Ag) in the base alloy layer.
